# EUROPÄISCHE PATENTSCHRIFT

(11) **EP 2 734 323 B1**
(45) Veröffentlichungstag und Bekanntmachung des Hinweises auf die Patenterteilung: **28.10.2015**
(21) Anmeldenummer: 12755946.6
(22) Anmeldetag: 18.07.2012
(51) Int. Cl.: B22F 3/02, B22F 3/12, B22F 5/06, B22F 5/08, H01M 8/02, B22F 5/00

(54) **FORMTEIL**
MOLDED PART
PIÈCE MOULÉE

(30) Priorität: 21.07.2011 AT 4122011
(43) Veröffentlichungstag der Anmeldung: 28.05.2014
(73) Patentinhaber: Plansee SE, 6600 Reutte (AT)
(72) Erfinder: BRANDNER, Marco, 87448 Waltenhofen (DE); HIRSCH, Oliver, A-6600 Reutte (AT); KRAUSSLER, Wolfgang, A-6671 Weissenbach (AT); LEITER, Thomas, A-6600 Reutte (AT)
(74) Vertreter: Ciesla, Bettina
(86) Internationale Anmeldenummer: PCT/AT2012/000191
(87) Internationale Veröffentlichungsnummer: WO 2013/010198

(56) Entgegenhaltungen:
- US-A1- 2006 192 323
- US-A1- 2011 143 261

## Beschreibung

Die Erfindung betrifft ein Formteil mit den Merkmalen des Oberbegriffes des Patentanspruches 1.

Aus EP 2 337 130 A1 ist ein derartiges Formteil bekannt. Es ist beispielsweise als ein Interkonnektor bzw. eine Endplatte für einen Brennstoffzellenstapel ausgebildet. Solche Interkonnektoren bzw. Endplatten haben eine Funktion als Stromsammler und müssen gleichzeitig eine sichere Trennung der Reaktionsgase zwischen Anoden- und Kathodenseite benachbarter Brennstoffzellen und die Führung dieser Reaktionsgase gewährleisten. Zu diesem Zweck werden Interkonnektoren und Endplatten als metallische Platten oder Scheiben mit noppen- und/oder stegförmigen Erhebungen ausgebildet. Diese Erhebungen sind bei Endplatten üblicherweise einseitig und bei Interkonnektoren auf beiden gegenüberliegenden Seiten des Grundkörpers ausgeführt. Die erhabenen Strukturen sind elektrische Kontaktbereiche zur elektrochemisch aktiven Brennstoffzelle hin. Die Zwischenräume zwischen den einzelnen noppen- und/oder stegförmigen Erhebungen dienen der Führung der Reaktionsgase. Der Interkonnektor bzw. die Endplatte muss eine hohe Dichtigkeit aufweisen, um die zuverlässige Trennung der Reaktionsgase zwischen Anoden- und Kathodenseite benachbarter Brennstoffzellen zu gewährleisten.

Die Herstellung der Endform derartiger Interkonnektoren und Endplatten durch spanabhebende Bearbeitung aus Halbzeug ist sehr kostenintensiv. Alternativ können die Formteile pulvermetallurgisch gefertigt werden, wobei pulverförmige Ausgangsmaterialien möglichst in die Endform gepresst und anschließend gesintert werden.

Bei der geometrischen Auslegung der Querschnitte (d.h. die Zwischenräume zwischen aneinander gereihten Erhebungen) für die Gasführung wären an sich rechteckige Querschnitte optimal, da sie einen guten Kompromiss im Hinblick auf maximale Kontaktierungsfläche bei gleichzeitig ausreichend großem Querschnitt für die Gasführung bilden. Derartige Formen sind jedoch auf pulvermetallurgischem Wege praktisch nicht herstellbar, so dass sich in der Praxis trapezförmige Querschnitte mit geraden, geneigten Flanken durchgesetzt haben. Diese Flanken sind bei der pulvermetallurgischen Herstellung üblicherweise mittels kleiner Übergangsradien einerseits mit einer in Höhenrichtung äußeren Endkontur der Erhebung (Eckenradius) und andererseits mit der Oberflächenkontur des Grundkörpers (Kurvenradius) verbunden, wobei ein gerader Flankenabschnitt der Flanke oder eine im Punkt des Übergangs beider Übergangsradien derselben Flanke liegende Tangente in einem Neigungswinkel zur Grundebene des Grundkörpers angeordnet ist.

Der Erfindung liegt die Aufgabe zugrunde, das Formteil für eine fertigungstechnisch einfache und prozesssichere Herstellung anzupassen.

Diese Aufgabe wird durch die Merkmalskombination des unabhängigen Patentanspruches 1 gelöst.

Erfindungsgemäß wird dies dadurch erreicht, dass mindestens zwei unterschiedliche Neigungswinkel an derselben Seite des Grundkörpers vorhanden sind, wobei unterschiedliche Neigungswinkel auch unterschiedliche Geometrien der jeweils zugeordneten Erhebungen repräsentieren. Auf diese Weise sind mindestens eine erste Geometrie und eine zweite Geometrie vorhanden. Auf überraschende Weise wurde erkannt, dass eine Kombination von mindestens zwei unterschiedlichen Neigungswinkeln auf einer Seite des Grundkörpers von Fertigungswerkzeugen bzw. Presswerkzeugen vorteilhaft genutzt werden kann, um einerseits die geforderte hohe Materialdichte mit einem geringen Dichtegradienten, also eine große Homogenität, des fertigen Formteiles für die zuverlässige Gastrennung zu erreichen und andererseits eine prozesssichere und störungsfreie Entformung des Bauteils zu erzielen. Hierdurch lässt sich eine zuverlässige Gastrennung durch das Formteil erzielen bei gleichzeitig begrenzter Komplexität des Fertigungswerkzeuges. Dies gilt insbesondere für die pulvermetallurgische Herstellung mittels Pressen und Sintern. Hierdurch ergibt sich auch die Möglichkeit, bei der pulvermetallurgischen Herstellung ein kostengünstiges einstufiges Pressverfahren anzuwenden, um die hohe und gleichmäßige Dichte des Formteiles bereits mit einem einzigen Pressvorgang zu erzielen. Dies ist herkömmlich bei Formteilen vielfach nicht möglich, insbesondere wenn es sich um Interkonnektoren und Endplatten handelt, die bei oxidkeramischen Hochtemperaturbrennstoffzellenstapeln (solid oxide fuel cell bzw. SOFC) zum Einsatz kommen und vielfach Legierungen mit hohen Chromanteilen als Werkstoff enthalten. Derartige Legierungen sind aber bei niedrigen Temperaturen äußerst spröde und können nur sehr schwer verpresst werden oder müssen über ein kostenaufwändiges, mehrstufiges Pressverfahren bearbeitet werden.

Unterschiedliche Neigungswinkel bieten die Möglichkeit, das Presswerkzeug für die pulvermetallurgische Herstellung geometrisch derart anzupassen, dass ein verbessertes Entformen des Presslings aus dem Presswerkzeug ohne störende Reibungskräfte zwischen den Oberflächen des Presslings, insbesondere seiner Erhebungen, und dem Presswerkzeug selbst erzielt wird. Relativbewegungen zwischen der Negativform des Fertigungswerkzeuges und dem zu pressenden Formteil bleiben fertigungstechnisch vorteilhaft ohne Einfluss auf die definierte Endgeometrie und mechanische Integrität des Bauteils, wobei die Pressdichte sowie der Pressdichtegradient des Formteiles weiterhin in ausreichendem Maß bereitgestellt sind. Die unterschiedlichen Neigungswinkel tragen somit zu einem qualitativ besonders hochwertigen Formteil bei. Die Positionierung der Erhebungen mit unterschiedlichen Geometrien kann in Reihenrichtung abhängig vom verwendeten Fertigungswerkzeug, insbesondere Presswerkzeug oder Pressstempel, individuell definiert werden. Die Anzahl fehlerhafter Formteile ist reduziert. Demgegenüber ist die Berücksichtigung unterschiedlicher definierter Geometrien an dem Fertigungswerkzeug verhältnismäßig kostengünstig realisierbar.

Das Entformen zwischen Pressling und Presswerkzeug kann in vielen Anwendungsfällen zusätzlich verbessert werden, wenn der Neigungswinkel der zweiten Geometrie größer ist als der Neigungswinkel der ersten Geometrie.

Die erste Geometrie ist vorzugsweise durch mindestens einen der folgenden physikalischen Parameter und dessen Werte repräsentiert:
- Der Neigungswinkel α1, α1' liegt im Bereich von 95° bis 135°, insbesondere 95° bis 120° und weiter bevorzugt 95° bis 110°.
- Der Kurvenradius R1, R1' liegt im Bereich von 0,15 bis 1 mm, insbesondere 0,3 bis 1 mm.
- Das Verhältnis des Kurvenradius R1, R1' zur Höhe h (R : h) liegt in einem Bereich von 0,25 bis 1, insbesondere 0,5 bis 1, weiter bevorzugt 0,7 bis 1.

Abgesehen von unterschiedlichen Neigungswinkeln können die bereitgestellten unterschiedlichen Geometrien auch unterschiedliche Kurvenradien und/oder unterschiedliche Höhen für eine oder mehrere Erhebungen aufweisen. Vorzugsweise sind die Eckenrundungen zwischen äußerer Endkontur der Erhebung und der Seitenflanke mit einem Eckenradius r ausgestattet. In diesem Fall besteht eine weitere Möglichkeit zur Bereitstellung unterschiedlicher Geometrien darin, unterschiedliche Eckenradien r zu definieren.

Die Ansprüche 3 bis 5 schlagen geeignete Neigungswinkel vor, welche die Realisierung der geforderten Dichte und Homogenität des Formteiles zusätzlich unterstützen. Bei verhältnismäßig großen Neigungswinkeln weist die Erhebung relativ flache Seitenflanken auf. Die hierdurch möglicherweise bedingte Verkleinerung des Kanalquerschnittes zwischen zwei unmittelbar benachbarten Erhebungen zur Gasführung kann durch eine entsprechend abgewandelte Dimensionierung anderer Parameter der Geometrie, insbesondere der Höhe und/oder des Eckenradius und/oder des Kurvenradius ausgeglichen werden.

Gemäß den Ansprüchen 6 und 7 ist mindestens eine Erhebung im Querschnitt asymmetrisch ausgebildet. Hierdurch werden etwaige Scherbelastungen durch Relativbewegungen zwischen Presswerkzeug und dem Pressling (also dem zu formenden Formteil) z.B. beim Entformen vermieden. Somit wird die geforderte Gasdichtheit über die gesamte Querschnittsfläche des Grundkörpers hinweg zusätzlich unterstützt.

Vorzugsweise weisen mindestens 50%, insbesondere mindestens 70%, der Gesamtzahl der in Reihenrichtung aneinandergereihten Erhebungen einer Seite des Grundkörpers eine erste Geometrie auf (Ansprüche 8 und 9). Abhängig von dem verwendeten Presswerkzeug und/oder der Größe des Grundkörpers in seiner Grundebene können bereits einzelne Erhebungen mit einer zweiten Geometrie ausreichend sein, um zuverlässig eine gleichmäßige Pressdichte für alle Erhebungen zu erzielen und gleichzeitig eine gute Entformbarkeit zu gewährleisten.

Die Ansprüche 10 und 11 schlagen entlang der Reihenrichtung mehrere unmittelbar benachbarte Erhebungen mit derselben Geometrie vor. Hierdurch kann das Presswerkzeug gezielt an unterschiedliche Segmente des Grundkörpers angepasst werden, um störende Einflüsse während des Pressens und Entformens zu vermeiden.

Vorzugsweise ist die zweite Geometrie an mindestens einer Erhebung realisiert, die in einem äußeren Abschnitt der Erhebungs-Reihe einer Seite des Grundkörpers angeordnet ist (Anspruch 12). Dies unterstützt eine kostengünstige Herstellung von Formteilen mit größerem Platten- oder Scheibenquerschnitt in der Grundebene des Grundkörpers, wenn die geforderte hohe Dichte mit geringem Dichtegradienten vor allem bei längeren Erhebungs-Reihen in äußeren Abschnitten der Reihenrichtung sichergestellt werden soll.

Die Ansprüche 13 bis 15 schlagen bevorzugte Maßnahmen und Bereiche für die Ausbildung der Geometrie-Parameter Höhe und Kurvenradius vor. Hierdurch kann der durch größere Neigungswinkel und somit flachere Seitenflanken zunächst reduzierte Kanalquerschnitt im Bereich der zweiten Geometrie zumindest wieder soweit ausgeglichen werden, dass er zumindest dem Kanalquerschnitt im Bereich der ersten Geometrie entspricht. Trotz der geometrischen Veränderung des Formteiles gegenüber herkömmlichen Bauteilen wird deshalb die Gasführungs-Leistungsfähigkeit aufrechterhalten, wenn das Formteil z.B. bei einer Brennstoffzelle eingesetzt wird.

Anspruch 16 schlägt bevorzugte Anwendungsmöglichkeiten des erfindungsgemäßen Formteiles vor. Sowohl beim Interkonnektor als auch bei der Endplatte handelt es sich um sogenannte Stromsammler. Der Interkonnektor ist üblicherweise zwischen zwei Zellen eines Zellenstapels angeordnet, während die Endplatte an einem Ende des Zellenstapels angeordnet ist. Mindestens eine der beiden Grundkörperseiten (anodenseitig und/oder kathodenseitig) des Formteiles weist eine Erhebungs-Reihe mit mindestens zwei unterschiedlichen Geometrien auf. Die mittels der unterschiedlichen Geometrien fertigungstechnisch einfach sichergestellte Gasdichtheit des Interkonnektors bzw. der Endplatte verbessert auf kostengünstige Weise das Langzeitverhalten und die Leistungsfähigkeit des Zellenstapels. Bei der elektrochemischen Zelle handelt es sich insbesondere um eine Festelektrolyt-Brennstoffzelle - auch SOFC (Solid Oxid Fuel Cell) genannt - oder um eine Zelle für Elektrolyseanwendungen, insbesondere Hochtemperaturelektrolyse.

Die Erfindung wird anhand der in den Zeichnungen dargestellten Ausführungsbeispiele näher erläutert. Es zeigen:
- Fig. 1:: eine maßstäblich vergrößerte, schematische und geschnittene Seitenansicht eines Ausschnittes eines vorbekannten Interkonnektors,
- Fig. 2:: eine maßstäblich vergrößerte, schematische und geschnittene Seitenansicht eines Ausschnittes eines erfindungsgemäßen Interkonnektors,
- Fig. 3:: eine rasterelektronenmikroskopische Aufnahme eines Querschliffes eines erfindungsgemäßen Interkonnektors,
- Fig. 4:: eine maßstäblich vergrößerte, schematische und geschnittene Seitenansicht eines Ausschnittes einer erfindungsgemäßen Endplatte.

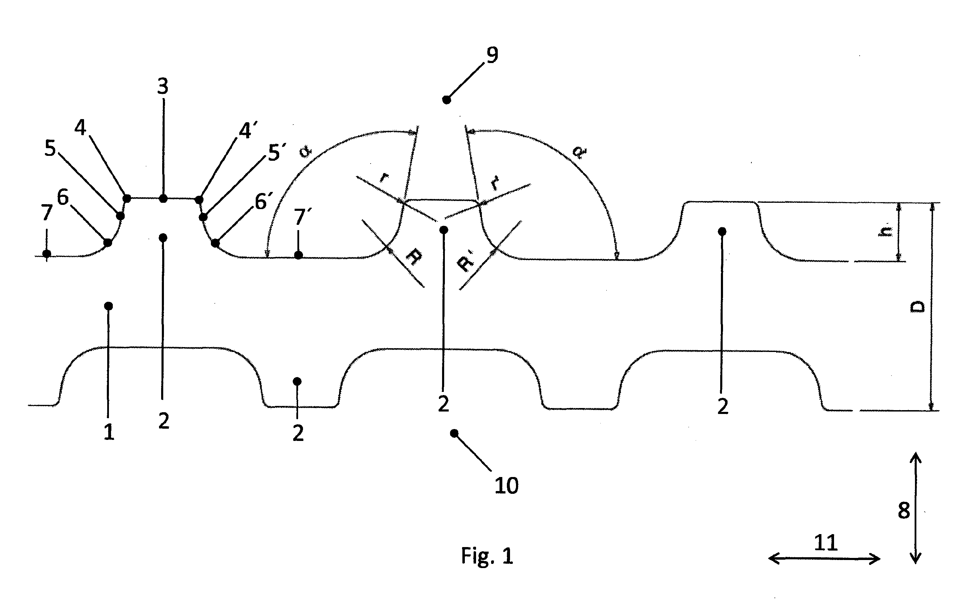

Fig. 1 zeigt schematisch in vergrößertem Maßstab einen Ausschnitt eines aus EP 2 337 130 A1 bekannten Interkonnektors für einen Brennstoffzellenstapel im Schnitt. Der Interkonnektor weist einen plattenförmigen Grundkörper 1 auf mit Erhebungen 2 auf beiden in Höhenrichtung 8 gegenüberliegenden Seiten des Grundkörpers 1. Die im Schnitt trapezförmigen Erhebungen 2 mit der Höhe h, welche über die Gesamterstreckung des Interkonnektors noppenförmig, durchgehend stegförmig, oder auch segmentiert stegförmig ausgebildet sein können, bilden durch ihre kanalartigen Zwischenräume zwischen jeweils zwei unmittelbar benachbarten Erhebungen 2 die Kanäle für die Gasführung des Interkonnektors. Die in Höhenrichtung 8 äußere Endkontur 3 jeder Erhebung 2 geht über eine Eckenrundung 4 bzw. 4' mit einem Eckenradius r bzw. r' in geneigte Seitenflanken mit einem geraden Flankenabschnitt 5 bzw. 5' über. Die geraden Abschnitte 5 bzw. 5' gehen dann in kurvenförmige Abschnitte 6 bzw. 6' mit einem Kurvenradius R bzw. R' über. Diese wiederum gehen dann übergangslos in die Oberflächenkontur 7 bzw. 7' des Grundkörpers 1 über. In Höhenrichtung 8 gegenüberliegende Endkonturen 3 begrenzen eine Dicke D des Interkonnektors. Die geneigten Seitenflächen schließen einen Winkel α bzw. α' mit der Oberflächenkontur 7 bzw. 7' des Grundkörpers 1 ein. Ebenso wäre es denkbar, dass bei kurvenförmigen Abschnitten 6 bzw. 6' mit sehr großen Radien R bzw. R' und kleinen Höhenabmessungen h der Erhebungen 2, die Eckenrundungen 4 bzw. 4' direkt ohne die dazwischen liegenden geraden Flankenabschnitte 5 bzw. 5' in die kurvenförmigen Abschnitte 6 bzw. 6' münden. In diesem Fall schließt die Tangente im Übergang von der Eckenrundungen 4 bzw. 4' in den kurvenförmigen Abschnitt 6 bzw. 6' den Neigungswinkel α bzw. α' mit der Oberflächenkontur 7' bzw. 7 des Grundkörpers 1 ein.

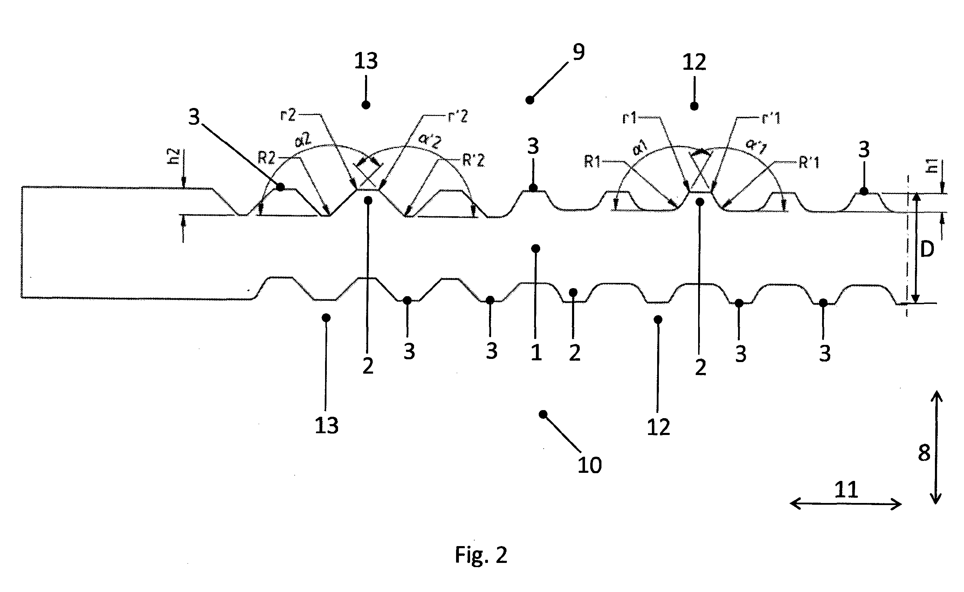

Bei dem ausschnittsweise im Querschnitt schematisch dargestellten Interkonnektor gemäß Fig. 2 sind an einer ersten Seite 9 und an einer in Höhenrichtung 8 gegenüberliegenden zweiten Seite 10 des Grundkörpers 1 jeweils eine Mehrzahl von Erhebungen 2 angeordnet. Sie sind in parallel zur Grundebene des Grundkörpers 1 verlaufender Reihenrichtung 11 aneinandergereiht. Erhebungen 2 mit einer ersten Geometrie sind in einem zentralen Abschnitt 12 der Erhebungs-Reihe angeordnet, während in einem vom Zentrum der Erhebungs-Reihe abgewandten äußeren Abschnitt 13 mehrere Erhebungen 2 mit einer zweiten Geometrie ausgebildet sind. Prinzipiell zwei unterschiedliche Geometrien sind an jeder Seite 9, 10 des Grundkörpers 1 realisiert, wobei die erste Geometrie auf beiden Seiten 9, 10 und/oder die zweite Geometrie auf beiden Seiten 9, 10 jeweils nicht identisch sein müssen.

Alternativ kann auch nur eine Seite 9 oder 10 des Interkonnektors neben der ersten Geometrie eine zweite Geometrie aufweisen.

In Fig. 2 wurden gegenüber Fig. 1 die Bezugszeichen 4, 4', 5, 5', 6, 6', 7, 7' lediglich der zeichnerischen Einfachheit halber weggelassen, auch wenn die konstruktive Ausgestaltung der Erhebungen 2 gemäß Fig. 2 prinzipiell die Merkmale dieser weggelassenen Bezugszeichen gemäß Fig. 1 aufweist bzw. aufweisen kann.

In Fig. 2 beträgt der Neigungswinkel α1 bzw. α1' der ersten Geometrie 120°. Der Neigungswinkel α2 bzw. α2' der zweiten Geometrie im äußeren Abschnitt 13 beträgt 135°. Die beiden Seitenflanken 5 derselben Erhebung 2 weisen vorzugsweise in einem äußeren Abschnitt 13 Neigungswinkel α2 bzw. α2' auf, die unterschiedlich sind, wobei dann insbesondere der dem Zentrum der Erhebungs-Reihe bzw. dem zentralen Abschnitt 12 zugewandte Neigungswinkel α2' kleiner ist als der einem Ende der Erhebungs-Reihe bzw. einem äußeren Abschnitt 13 zugewandte Neigungswinkel α2.

Die äußeren Endkonturen 3 der Erhebungen 2 liegen bei beiden Erhebungs-Reihen jeweils in einer Ebene, welche parallel zur Grundebene des Grundkörpers 1 verläuft. Gleichzeitig ist die Höhe h1 der Erhebungen 2 im zentralen Abschnitt 12 kleiner als die Höhe h2 in dem äußeren Abschnitt 13. Mit anderen Worten sind die entsprechenden Oberflächenkonturen 7 des Grundkörpers 1 im Bereich des äußeren Abschnittes 13 einerseits und im Bereich des zentralen Abschnittes 12 andererseits in Höhenrichtung 8 versetzt angeordnet.

Es wurden Formteile als Interkonnektoren pulvermetallurgisch hergestellt. Mittels eines Presswerkzeugs wurden die Bauteile derart gepresst, dass zumindest ein zentraler Abschnitt der beiden in Höhenrichtung 8 gegenüberliegenden Erhebungs-Reihen eine erste Geometrie aufwies. Während eine Erhebungs-Reihe einer Zellen-Kathode zugeordnet ist, ist die zweite Erhebungs-Reihe einer Zellen-Anode zugeordnet. An den beiden äußeren Abschnitten 13 jeder Erhebungs-Reihe waren drei Erhebungen 2 mit einer zweiten Geometrie vorhanden. 88% der Gesamtanzahl der Erhebungen 2 wiesen die erste Geometrie auf. Die wichtigsten geometrischen Parameter dieser Interkonnektoren sind nachfolgend wiedergegeben.

Kathodenseitig wurden für die Erhebungen 2 folgende Geometrien realisiert:

| Parameter | Erhebungen mit erster Geometrie | Erhebungen mit zweiter Geometrie |
|---|---|---|
| Neigungswinkel α | 110° | 140° |
| Höhe h | 0,4 mm | 0,7 mm |
| Kurvenradius R | 0,35 mm | 0,05 mm |
| Verhältnis R: h | 0,875 | 0,071 |
| Eckenradius r | 0,05 | 0,05 |

Anodenseitig wurden für die Erhebungen 2 folgende Geometrien realisiert:

| Parameter | Erhebungen mit erster Geometrie | Erhebungen mit zweiter Geometrie |
|---|---|---|
| Neigungswinkel α | 110° | 140° |
| Höhe h | 0,4 mm | 0,6 mm |
| Kurvenradius R | 0,35 mm | 0,05 mm |
| Verhältnis R: h | 0,875 | 0,083 |
| Eckenradius r | 0,05 | 0,05 |

Derart ausgebildete Interkonnektoren zeigten einen hohen Grad an Homogenität der Materialdichte, d.h. einen geringen Dichtegradienten, über sämtliche Erhebungen entlang einer Erhebungs-Reihe hinweg, so dass bei der Herstellung vorteilhaft ein einstufiges Pressverfahren ausreichend ist.

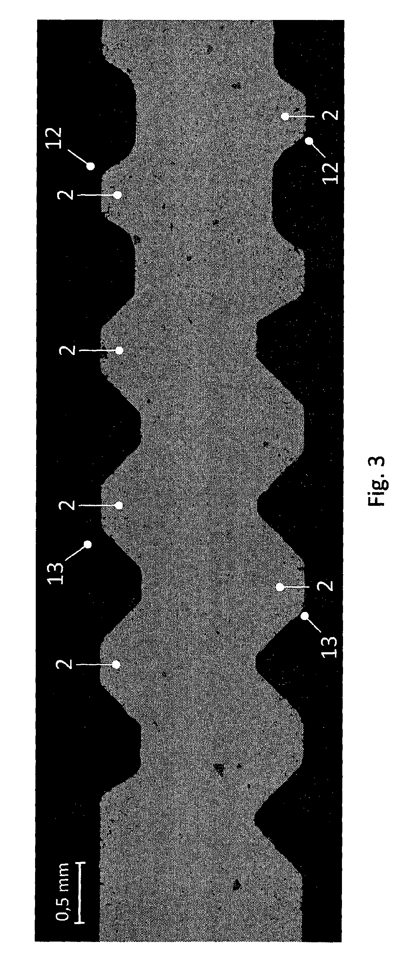

Ein Beispiel für einen pulvermetallurgisch hergestellten Interkonnektor ist Fig. 3 entnehmbar. Die beiden unterschiedlichen Geometrien der Erhebungen 2 in einem äußeren Abschnitt 13 und einem zentralen Abschnitt 12 der Erhebungs-Reihe sind gut erkennbar.

Zur Herstellung der Formteile mit den vorgenannten beiden Geometrien wurde z.B. ein Pulveransatz bestehend aus 95 Gew.-% Cr-Pulver und 5 Gew.-% einer FeY-Vorlegierung (Legierung mit 0,5 Gew.-% Y) verwendet. Diesem Pulveransatz wurde 1 Gew.-% Presshilfsmittel (Wachs) hinzugegeben. Danach wurde dieser Pulveransatz in einem Taumelmischer 15 Minuten gemischt. Ein Presswerkzeug wurde mit einem Pressstempel entsprechend der vorbeschriebenen unterschiedlichen Geometrien ausgestattet. Das gepresste Pulver, also der Pressling wurde bei 1100°C für 20 Minuten unter Wasserstoffatmosphäre in einem Bandofen zum Zweck der Entwachsung vorgesintert. Danach erfolgte ein Hochtemperatur-Sintern des Bauteiles bei 1400°C für 7 Stunden unter Wasserstoffatmosphäre zum Zweck einer weiteren Verdichtung und Legierungsbildung. Daraufhin erfolgte eine Voroxidation des Bauteils bei 950°C für eine Zeitdauer von 10 bis 30 Stunden, um eventuell vorhandene Restporosität soweit zu verschließen, dass die Permeabilität des Materials ausreichend niedrig ist. Anschließend wurden die Oberflächen des Bauteils durch einen allseitigen Sandstrahlprozess von der Oxidschicht befreit.

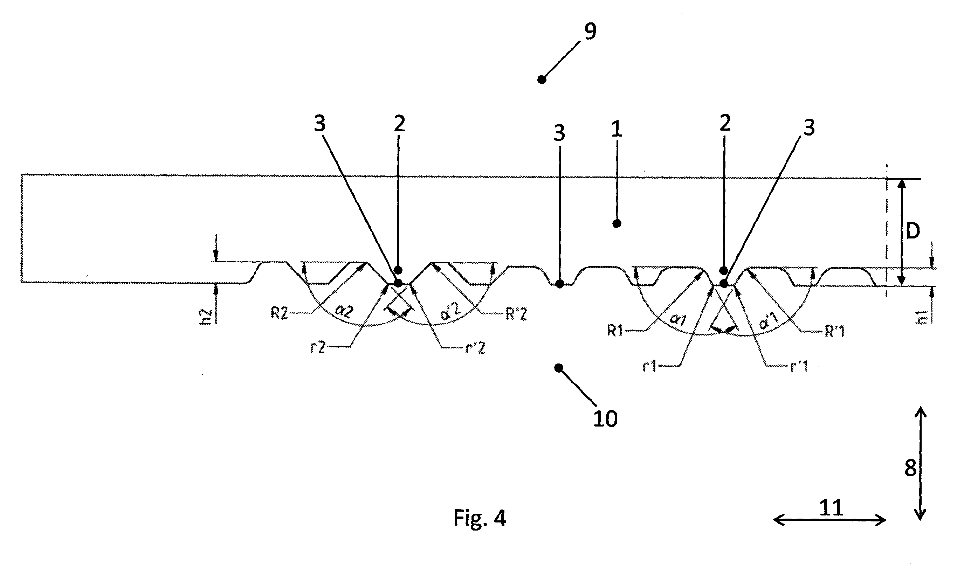

Fig. 4 zeigt schematisch in vergrößertem Maßstab den Ausschnitt einer erfindungsgemäßen Endplatte für einen Brennstoffzellenstapel im Schnitt. Die Erhebungen (2) sind prinzipiell genauso wie beim Interkonnektor nach Fig. 2 ausgeführt, im Unterschied zu Fig. 3 jedoch nur auf einer Seite 10 des Grundkörpers in Höhenrichtung 8 betrachtet.

## Patentansprüche

1. Pulvermetallurgisches Formteil, aufweisend einen scheiben- oder plattenartigen Grundkörper (1) und eine Vielzahl von in einer Reihenrichtung (11) aneinander gereihte und hierdurch eine Reihe bildende noppen- und/oder stegförmige Erhebungen (2) mit einer Höhe (h1, h2) senkrecht zur Grundebene des Grundkörpers (1) und mit im Querschnitt jeweils zwei Seitenflanken, welche von einer in Höhenrichtung (8) äußeren Endkontur (3) der Erhebung (2) über Eckenrundungen (4, 4') in kurvenförmige Abschnitte (6, 6') mit einem Kurvenradius (R, R') münden, wobei der Kurvenradius (R, R') in die Oberflächenkontur (7) des Grundkörpers (1) übergeht, wobei
- ein gerader Flankenabschnitt (5) der Seitenflanke oder
- eine im Punkt des Übergangs von der Eckenrundung (4) in den kurvenförmigen Abschnitt (6) liegende Tangente der Seitenflanke in einem Neigungswinkel (α1, α1') zur Grundebene des Grundkörpers (1) angeordnet ist und wobei Erhebungen (2) an mindestens einer Seite (9, 10) der beiden in Höhenrichtung (8) gegenüberliegenden Seiten (9, 10) des Grundkörpers (1) angeordnet sind,
**dadurch gekennzeichnet, dass**
mindestens zwei unterschiedliche Neigungswinkel (α1, α1'; α2, α2') an derselben Seite (9, 10) des Grundkörpers (1) vorhanden sind, wobei die mindestens zwei unterschiedlichen Neigungswinkel (α1, α1'; α2, α2') mindestens eine erste Geometrie (h1, r1, r1', R1, R1', α1, α1') und eine zweite Geometrie (h2, r2, r2', R2, R2', α2, α2') repräsentieren.

2. Formteil nach Anspruch 1, **dadurch gekennzeichnet, dass**
der Neigungswinkel (α2, α2') der zweiten Geometrie (h2, r2, r2', R2, R2', α2, α2') größer ist als der Neigungswinkel (α1, α1') der ersten Geometrie (h1, r1, r1', R1, R1', α1, α1').

3. Formteil nach einem der vorhergehenden Ansprüche, **dadurch gekennzeichnet, dass**
der Neigungswinkel (α1, α1') der ersten Geometrie (h1, r1, r1', R1, R1', α1, α1') in einem Bereich von 95° bis 135° liegt.

4. Formteil nach einem der vorhergehenden Ansprüche, **dadurch gekennzeichnet, dass**
der Neigungswinkel (α2, α2') der zweiten Geometrie (h2, r2, r2', R2, R2', α2, α2') in einem Bereich von 135° bis 150° liegt.

5. Formteil nach einem der vorhergehenden Ansprüche, **dadurch gekennzeichnet, dass**
Seitenflanken benachbarter Erhebungen (2) unterschiedliche Neigungswinkel (α1, α1'; α2, α2') aufweisen.

6. Formteil nach einem der vorhergehenden Ansprüche, **dadurch gekennzeichnet, dass**
die beiden Seitenflanken derselben Erhebung (2) unterschiedliche Neigungswinkel (α1, α1'; α2, α2') aufweisen.

7. Formteil nach Anspruch 6, **dadurch gekennzeichnet, dass**
die in Reihenrichtung (11) einem Ende (13) der Erhebungs-Reihe zugewandte Seitenflanke einen größeren Neigungswinkel (α2) aufweist als die dem Zentrum (12) der Erhebungs-Reihe zugewandte Seitenflanke.

8. Formteil nach einem der vorhergehenden Ansprüche, **dadurch gekennzeichnet, dass**
höchstens 50% der Gesamtanzahl der Erhebungen (2) die zweite Geometrie (h2, r2, r2', R2, R2', α2, α2') aufweisen.

9. Formteil nach Anspruch 8, **dadurch gekennzeichnet, dass**
höchstens 30% der Gesamtanzahl der Erhebungen (2) die zweite Geometrie (h2, r2, r2', R2, R2', α2, α2') aufweisen.

10. Formteil nach einem der vorhergehenden Ansprüche, **dadurch gekennzeichnet, dass**
die erste Geometrie (h1, r1, r1', R1, R1', α1, α1') und/oder die zweite Geometrie (h2, r2, r2', R2, R2', α2, α2') entlang der Reihenrichtung (11) der Erhebungs-Reihe an mehreren unmittelbar benachbarten Erhebungen (2) vorhanden ist.

11. Formteil nach Anspruch 10, **dadurch gekennzeichnet, dass**
die unmittelbar benachbarten Erhebungen (2) der ersten Geometrie (h 1, r1, r1', R1, R1 α1, α1') in einem zentralen Abschnitt (12) der Erhebungs-Reihe angeordnet sind.

12. Formteil nach einem der vorhergehenden Ansprüche, **dadurch gekennzeichnet, dass**
ein vom Zentrum der Erhebungs-Reihe abgewandter äußerer Abschnitt (13) der Erhebungs-Reihe mindestens eine Erhebung (2) mit der zweiten Geometrie (h2, r2, r2', R2, R2', α2, α2') aufweist.

13. Formteil nach einem der vorhergehenden Ansprüche, **dadurch gekennzeichnet, dass**
die Erhebung (2) der ersten Geometrie (h1, r1, r1', R1, R1', α1, α1') eine Höhe (h1) aufweist, welche kleiner ist als die Höhe (h2) einer Erhebung (2) der zweiten Geometrie (h2, r2, r2', R2, R2', α2, α2').

14. Formteil nach einem der vorhergehenden Ansprüche, **dadurch gekennzeichnet, dass**
der Kurvenradius (R2, R2') einer Erhebung (2) der zweiten Geometrie (h2, r2, r2', R2, R2', α2, α2') kleiner als 0,15 mm ist.

15. Formteil nach einem der vorhergehenden Ansprüche, **dadurch gekennzeichnet, dass**
das Verhältnis von Kurvenradius (R2, R2') zur Höhe (h2) R : h einer Erhebung (2) der zweiten Geometrie (h2, r2, r2', R2, R2', α2, α2') kleiner als 0,25 ist.

16. Formteil nach einem der vorhergehenden Ansprüche,
**dadurch gekennzeichnet, dass**
das Formteil ein Interkonnektor oder eine Endplatte zur elektrischen Verbindung elektrochemischer Zellen ist.

## Claims

1. A powder metallurgical molded part comprising a disk-like or plate-like main body (1) and a multiplicity of knob-shaped and/or ridge-shaped elevations (2) which are arranged next to one another in a row direction (11) and thereby form a row and which have a height (h1, h2) perpendicular to the main plane of the main body (1) and which each have a cross section with two side flanks, which lead from an outer end contour (3), as seen in the height direction (8), of the elevation (2) via rounded corner portions (4, 4') into curved portions (6, 6') with a curve radius (R, R'), wherein the curve radius (R, R') merges into the surface contour (7) of the main body (1), wherein
- a rectilinear flank portion (5) of the side flank or
- a tangent of the side flank lying at the point where the rounded corner portion (4) merges into the curved portion (6)
is arranged at an angle of inclination (α1, α1') with respect to the main plane of the main body (1), and wherein elevations (2) are arranged on at least one side (9, 10) of the two sides (9, 10) of the main body (1) which lie opposite one another in the height direction (8),
**characterized in that**
at least two different angles of inclination (α1, α1'; α2, α2') are present on the same side (9, 10) of the main body (1), wherein the at least two different angles of inclination (α1, α1'; α2, α2') represent at least a first geometry (h1, r1, r1', R1, R1', α1, α1') and a second geometry (h2, r2, r2', R2, R2', α2, α2').

2. The molded part as claimed in claim 1, **characterized in that**
the angle of inclination (α2, α2') of the second geometry (h2, r2, r2', R2, R2', α2, α2') is larger than the angle of inclination (α1, α1') of the first geometry (h1, r1, r1', R1, R1', α1, α1').

3. The molded part as claimed in either of the preceding claims, **characterized in that**
the angle of inclination (α1, α1') of the first geometry (h1, r1, r1', R1, R1', α1, α1') lies in a range of 95° to 135°.

4. The molded part as claimed in one of the preceding claims, **characterized in that**
the angle of inclination (α2, α2') of the second geometry (h2, r2, r2', R2, R2', α2, α2') lies in a range of 135° to 150°.

5. The molded part as claimed in one of the preceding claims, **characterized in that**
side flanks of adjacent elevations (2) have different angles of inclination (α1, α1'; α2, α2').

6. The molded part as claimed in one of the preceding claims, **characterized in that**
the two side flanks of the same elevation (2) have different angles of inclination (α1, α1'; α2, α2').

7. The molded part as claimed in claim 6, **characterized in that**
the side flank facing toward an end (13) of the row of elevations in the row direction (11) has a greater angle of inclination (α2) than the side flank facing toward the center (12) of the row of elevations.

8. The molded part as claimed in one of the preceding claims, **characterized in that**
at most 50% of the total number of elevations (2) have the second geometry (h2, r2, r2', R2, R2', α2, α2').

9. The molded part as claimed in claim 8, **characterized in that**
at most 30% of the total number of elevations (2) have the second geometry (h2, r2, r2', R2, R2', α2, α2').

10. The molded part as claimed in one of the preceding claims, **characterized in that**
the first geometry (h1, r1, r1', R1, R1', α1, α1') and/or the second geometry (h2, r2, r2', R2, R2', α2, α2') is present at a plurality of directly adjacent elevations (2) along the row direction (11) of the row of elevations.

11. The molded part as claimed in claim 10, **characterized in that**
the directly adjacent elevations (2) of the first geometry (h1, r1, r1', R1, R1', α1, α1') are arranged in a central portion (12) of the row of elevations.

12. The molded part as claimed in one of the preceding claims, **characterized in that**
an outer portion (13) of the row of elevations remote from the center of the row of elevations has at least one elevation (2) with the second geometry (h2, r2, r2', R2, R2', α2, α2').

13. The molded part as claimed in one of the preceding claims, **characterized in that**
the elevation (2) of the first geometry (h1, r1, r1', R1, R1', α1, α1') has a height (h1) which is smaller than the height (h2) of an elevation (2) of the second geometry (h2, r2, r2', R2, R2', α2, α2').

14. The molded part as claimed in one of the preceding claims, **characterized in that**
the curve radius (R2, R2') of an elevation (2) of the second geometry (h2, r2, r2', R2, R2', α2, α2') is smaller than 0.15 mm.

15. The molded part as claimed in one of the preceding claims, **characterized in that**
the ratio of curve radius (R2, R2') to height (h2) R : h of an elevation (2) of the second geometry (h2, r2, r2', R2, R2', α2, α2') is less than 0.25.

16. The molded part as claimed in one of the preceding claims, **characterized in that**
the molded part is an interconnector or an end plate for electrically connecting electrochemical cells.

## Revendications

1. Pièce moulée par métallurgie des poudres, comprenant un corps de base (1) en forme de disque ou de plaque et une pluralité de rehaussements (2) en forme de bourrelets et/ou de barrettes, disposés en rang serré dans une direction de groupement (11) et constituant ainsi une rangée, rehaussements d'une hauteur (h1, h2) verticalement au plan de base du corps de base (1) et avec respectivement deux flancs latéraux en coupe transversale, flancs débouchant dans des sections (6, 6') en forme de courbe avec un rayon de courbure (R, R') à partir d'un contour d'extrémité (3) du rehaussement, contour externe dans le sens de la hauteur (8), en passant par des arrondis de coin (4, 4'), où le rayon de courbure (R, R') se transforme en contour de surface (7) du corps de base (1), où
- une section de flanc rectiligne (5) du flanc latéral ou
- une tangente du flanc latéral située dans un point de transition entre l'arrondi de coin (4) et la section (6) en forme de courbe est disposé dans un angle d'inclinaison (α1, α1') par rapport au plan de base du corps de base (1) et où des rehaussements (2) sont prévus au niveau au moins d'un côté (9, 10) des deux côtés opposés (9, 10) du corps de base (1) dans le sens de la hauteur (8), **caractérisée en ce**
**qu'**au moins deux angles d'inclinaison différents (α1, α1'; α2, α2') sont prévus sur le même côté (9, 10) du corps de base (1), où lesdits au moins deux angles d'inclinaison (α1, α1'; α2, α2') représentent au moins une première géométrie (h1, r1, r1', R1, R1', α1, α1') et une seconde géométrie (h2, r2, r2', R2, R2, α2, α2').

2. Pièce moulée selon la revendication 1, **caractérisée en ce que** l'angle d'inclinaison (α2, α2') de la seconde géométrie (h2, r2, r2', R2, R2'r α2, α2') est supérieur à l'angle d'inclinaison (α1, α1') de la première géométrie (h1, r1, r1', R1, R1', α1, α1').

3. Pièce moulée selon l'une quelconque des revendications précédentes, **caractérisée en ce que** l'angle d'inclinaison (α1, α1') de la première géométrie (h1, r1, r1', R1, R1', α1, α1') est compris dans une fourchette de 95° à 135°.

4. Pièce moulée selon l'une quelconque des revendications précédentes, **caractérisée en ce que** l'angle d'inclinaison (α2, α2') de la seconde géométrie (h2, r2, r2', R2, R2'r, α2, α2') est compris dans une fourchette de 135° à 150°.

5. Pièce moulée selon l'une quelconque des revendications précédentes, **caractérisée en ce que** des flancs latéraux de rehaussements voisins (2) présentent des angles d'inclinaison différents (α1, α1'; α2, α2').

6. Pièce moulée selon l'une quelconque des revendications précédentes, **caractérisée en ce que** les deux flancs latéraux du même rehaussement (2) présentent des angles d'inclinaison différents (α1, α1'; α2, α2).

7. Pièce moulée selon la revendication 6, **caractérisée en ce que** le flanc latéral faisant face à une extrémité (13) de la rangée de rehaussement dans le sens de groupement (11) présente un angle d'inclinaison (α2) supérieur au flanc latéral faisant face au centre (12) de la rangée de rehaussements.

8. Pièce moulée selon l'une quelconque des revendications précédentes, **caractérisée en ce qu'**au plus 50% du nombre total des rehaussements (2) présentent la seconde géométrie (h2, r2, r2', R2, R2', α2, α2').

9. Pièce moulée selon la revendication 8, **caractérisée en ce qu'**au plus 30% du nombre total des rehaussements (2) présentent la seconde géométrie (h2, r2, r2', R2, R2', α2, α2').

10. Pièce moulée selon l'une quelconque des revendications précédentes, **caractérisée en ce que** la première géométrie (h1, r1, r1', R1, R1', α1, α1) et/ou la seconde géométrie (h2, r2, r2', R2, R2', α2, α2') est prévue le long du sens de groupement (11) de la rangée de rehaussement au niveau de plusieurs rehaussements (2) immédiatement voisins.

11. Pièce moulée selon la revendication 10, **caractérisée en ce que** les rehaussements (2) immédiatement voisins de la première géométrie (h1, r1, r1', R1, R1', α1, α1') sont prévus dans une section centrale (12) de la rangée de rehaussements.

12. Pièce moulée selon l'une quelconque des revendications précédentes, **caractérisée en ce qu'**une section externe (13) de la rangée de rehaussements, section tournant le dos au centre de la rangée de rehaussements, présente au moins un rehaussement (2) avec la seconde géométrie (h2, r2, r2', R2, R2', α2, α2').

13. Pièce moulée selon l'une quelconque des revendications précédentes, **caractérisée en ce que** le rehaussement (2) de la première géométrie (h1, r1, r1', R1, R1', α1, α1') présente une hauteur (h1) Inférieure à la hauteur (h2) d'un rehaussement (2) de la seconde géométrie (h2, r2, r2', R2, R2', α2, α2').

14. Pièce moulée selon l'une quelconque des revendications précédentes, **caractérisé en ce que** le rayon de courbure (R2, R2') d'un rehaussement (2) de la seconde géométrie (h2, r2, r2', R2, R2', α2, α2') est inférieur à 0,15 mm.

15. Pièce moulée selon l'une quelconque des revendications précédentes, **caractérisée en ce que** le rapport entre le rayon de courbure (R2, R2') et la hauteur (h2) R:h d'un rehaussement (2) de la seconde géométrie (h2, r2, r2', R2, R2', α2, α2') est inférieur à 0,25.

16. Pièce moulée selon l'une quelconque des revendications précédentes, **caractérisée en ce que** la pièce moulée est un interconnecteur ou bien une plaque d'extrémité pour le raccordement électrique de cellules électrochimiques.
